## Europäisches Patentamt
## European Patent Office
## Office européen des brevets

(19)

(11) Numéro de publication: **0 223 891**
**B1**

## FASCICULE DE BREVET EUROPEEN

(12)

(45) Date de publication du fascicule du brevet:
**25.10.89**

(51) Int. Cl.⁴: **B29C 45/26**

(21) Numéro de dépôt: **85420153.0**

(22) Date de dépôt: **22.08.85**

(54) Ensemble de moulage pour l'injection des matières plastiques.

(43) Date de publication de la demande:
**03.06.87 Bulletin 87/23**

(45) Mention de la délivrance du brevet:
**25.10.89 Bulletin 89/43**

(84) Etats contractants désignés:
**AT CH DE GB IT LI LU NL SE**

(56) Documents cités:
**DE-A- 2 611 641**
**FR-A- 1 316 838**
**FR-A- 2 052 215**
**FR-A- 2 564 773**
**US-A- 2 531 965**
**US-A- 2 564 615**
**US-A- 3 091 809**
**US-A- 3 103 705**
**US-A- 3 174 189**
**US-A- 3 932 085**

**PATENTS ABSTRACTS OF JAPAN,
vol. 7, no. 203 (M-241) [1348], 8 septembre 1983
WERKSTATTSTECHNIK. ZEITSCHRIFT FÜR
INDUSTRIELLE FERTIGUNG,
vol. 74, no. 4, Avril 1984, pages 227-229, Springer-Verlag,
Würzburg, DE; R. SIMMONDS: "Metallspritzen
niedrigschmelzender Legierungen im Formenbau"**

(73) Titulaire: **INDUSTRIES PLASTIQUES MOULES - IPM
Société anonyme, 1, rue Charles Fourrier,
F-69600 Oullins(FR)**

(72) Inventeur: **Thivichon-Prince, Guy, 19, rue Ferrer,
F-69600 Oullins(FR)**
Inventeur: **Thivichon-Prince, Jacky, Champ du Mont,
F-69530 Brignais(FR)**

(74) Mandataire: **Laurent, Michel et al, Cabinet LAURENT et
GUERRE B.P. 32, F-69131 Ecully Cédex(FR)**

ACTORUM AG

## Description

L'invention concerne un ensemble de moulage pour l'injection des matières plastiques selon le préambule de la revendication 1. Un tel ensemble est connu du document US-A 2 564 615.

Comme on le sait, un ensemble de moulage, dénommé également "carcasse", comprend essentiellement :
- deux blocs, respectivement inférieur et supérieur, situés de part et d'autre du plan de joint, qui portent chacun les empreintes inférieure et supérieure constituant le moule proprement dit ;
- une batterie d'éjecteurs, traversant l'un des blocs, destinée à repousser la pièce moulée.

Dans les brevets US-A-2 531 965 et FR-A-1 316 838, on a suggéré de placer la batterie dans une cavité prévue à cet effet dans le bloc inférieur. Cette cavité, n'étant pas fermée, manque de rigidité lorsque le bloc est en alliage léger. En outre et surtout, lors de l'éjection des pièces, il y a toujours un risque important de voir ces pièces ou d'autres objets pénétrer dans cette cavité ouverte, ce qui peut détériorer la batterie.

Dans le brevet US-A-2 564 615, on a suggéré de fermer cette cavité par une plaque faisant partie intégrante de l'organe de commande de la presse d'injection. De la sorte, cette disposition particulièrement adaptée aux presses à injecter destinées à des fabrications très spécifiques et en grandes séries, ne peut être utilisée avec des presses standards, c'est-à-dire avec des presses susceptibles de recevoir des moules normalisés, de formes et de dimensions différentes, comme le sont les presses actuelles.

Bref, les solutions proposées à ce jour sont onéreuses en raison du nombre important de pièces à usiner et à ajuster et sont lourdes à manipuler ou à stocker, d'autant qu'en pratique, ces pièces sont en acier.

L'invention pallie ces inconvénients. Elle concerne un ensemble de moulage par injection des matières plastiques du type en question qui soit léger, donc plus facile à manipuler et à usiner.

L'ensemble de moulage selon l'invention, pour l'injection des matières plastiques entre deux empreintes respectivement inférieur et supérieure, du type constitué de deux blocs, respectivement inférieur et supérieur, situés de part et d'autre d'un plan de joint, et dans lequel le bloc inférieur comporte une première cavité fermée contenant la batterie d'éjecteur, le bloc inférieur comportant, sur la face opposée à celle comportant cette première cavité fermée une seconde cavité ouverte destinée à recevoir l'empreinte inférieure de moulage, et le bloc supérieur comportant une troisième cavité ouverte, disposée en regard de la seconde cavité ouverte du bloc inférieur, destinée à recevoir l'empreinte supérieur moulage, est caractérisé en ce que
- les deux blocs sont céalisés en alliage léger,
- ladite première cavité du bloc inférieur recevant la batterie est fermée par une plaque an acier solidaire de ce bloc,
- ladite troisième cavité ouverte est connectée à l'alimentation en matière plastique,
- et chacune des faces en regard de chaque bloc dans lesquelles sont ménagées les cavités ouvertes présentent une plaque interchangeable en acier, disposée en vis-à-vis et au voisinage immédiat du plan de joint.

En d'autres termes, l'invention consiste :
- d'une part, à prévoir les deux blocs en alliage léger;
- d'autre part, à fermer par une plaque en acier la cavité inférieure du bloc inférieur recevant la batterie, afin de recevoir des colonnes de guidage de cette batterie et rigidifier ce bloc inférieur ;
- et enfin, à utiliser des plaques interchangeables en acier au niveau du plan de joint, afin d'améliorer la résistance de l'ensemble aux contraintes de l'injection, notamment à l'écrasement lors des fermetures répétées du moule, et ainsi à participer à la rigidification de l'ensemble avec la plaque de fermeture de la cavité de la batterie.

Avantageusement, en pratique :
- les blocs sont monoblocs, ce qui les rend très rigides et sont en un alliage d'alumium traité thermiquement, par exemple en un alliage type 7075 ou 7010 traité T651 selon la nomenclature de l'Aluminium Association et couramment désignés par la marque FORTAL HR (marque déposée par CEGEDUR - Société de Transformation de l'Aluminium Péchiney) ; ainsi, dans ces deux blocs, on peut facilement usiner les cavités caractéristiques de l'invention ;
- le bloc supérieur est muni d'une plaque en acier sur la face opposée à celle formant le plan de joint, cette plaque en acier pouvant être inserrée ou superposée au bloc, notamment en vue de sa fixation magnétique sur le plateau des machines-outils utilisées pour l'usinage ;
- la cavité inférieure où est logée la batterie présente des piliers taillés dans le bloc inférieur, et la plaque de manoeuvre des éjecteurs de la batterie coulisse dans des bagues fixées sur ces piliers qui prennent également appui sur la plaque de fermeture, également solidaire de ce bloc ; de la sorte, cette plaque de fermeture isole le mécanisme de la batterie de l'environnement extérieur, empêchant ainsi l'introduction de poussières ou accidentellement de corps étrangers dans cette cavité.

Selon une caractéristique importante de l'invention, la zone du plan de joint comporte donc deux plaques interchangeables en acier, fixées chacune à l'un des blocs et ce, pour éviter la détérioration prématurée de cette zone qui est fortement sollicitée. La dureté de ces plaques interchangeables est déterminée en fonction de la durée de vie prévisible des empreintes.

Pour des empreintes de grandes dimensions ou fortement sollicitées, il est souhaitable que la cavitée fermée du bloc inférieur dans lequel se trouve la batterie, présente comme déjà dit, des piliers de section appropriée : circulaire, oblongue,..., taillés dans ce bloc inférieur, de manière à servir de renforts locaux.

La manière dont l'invention peut être réalisée et les avantages qui en découlent ressortiront mieux de l'exemple de réalisation qui suit, donné à titre indicatif et non-limitatif, à l'appui des figures annexées.

La figure 1 représente en coupe et en perspective un ensemble de moulage conforme à l'invention.

La figure 2 représente une vue en coupe axiale d'une version particulière de réalisation de la cavité caractéristique fermée du logement de la batterie.

Pour des raisons de clarté et de facilité d'exposé, les ensembles de moulage seront décrits en position verticale. Il est entendu que ceux-ci peuvent bien évidemment être utilisés en toute position.

L'ensemble de moulage suivant l'invention comporte essentiellement deux blocs respectivement inférieur (20) et supérieur (21) en alliage léger, à base d'aluminium, par exemple en 7075 état T 651. Le bloc inférieur (20) présente :
- d'une part, à sa partie inférieure, une cavité usinée (22) à angles arrondis (23) fermée par une plaque d'acier (24), laquelle contient les éjecteurs (25) de la batterie commandés par une plaque de manoeuvre (26), formée en deux parties (26, 26'), mobile verticalement sur des colonnes de guidage (27) ;
- et d'autre part, à sa partie supérieure une deuxième cavité (28) également à angles arrondis, dans laquelle s'encastre l'empreinte inférieure (29) ; pour des raisons de commodité, cette empreinte (29) est formée en deux parties.

De façon analogue, le bloc supérieur (21) présente une cavité (28') où s'encastre l'empreinte supérieure (29), également en deux parties. Les empreintes (29,29') sont fixées dans leurs logements respectifs (28,28') de manière connue au moyen de vis non-représentées.

Le bloc supérieur (21) comporte de plus le canal d'injection de la matière plastique (30), ainsi que l'anneau (31) d'adaptation au canal d'injection de la presse. La partie supérieure comporte une plaque rapportée en acier (32) destinée à faciliter l'usinage de ce bloc (21).

De manière connue, ces deux ensembles (20, 21) inférieur et supérieur sont fixés à chacun des plateaux non-représentés de la presse.

Selon une caractéristique de l'invention, sur les surfaces des deux blocs (20,21) destinés à venir en regard et à former le plan de joint (10), sont également rapportées deux plaques interchangeables (33,34), fixées par les vis (35), en acier par exemple en tôle bleuie, en tôle à calibre ou en acier traité pour 1800 MPa ou plus, voire en acier trempé. La dureté de ces plaques interchangeables (33,34) caractéristiques est déterminée en fonction de la durée de vie envisagée pour les empreintes (29,29').

Les blocs (20,21) comportent également des dégagements latéraux (36) qui permettent la fixation de ceux-ci aux plateaux de la presse (non-représentés) par l'intermédiaire de vis (non-représentées). Afin d'éviter le matage local des blocs, une rondelle d'acier (37) est encastrée dans le bloc sous la tête de chaque vis de fixation.

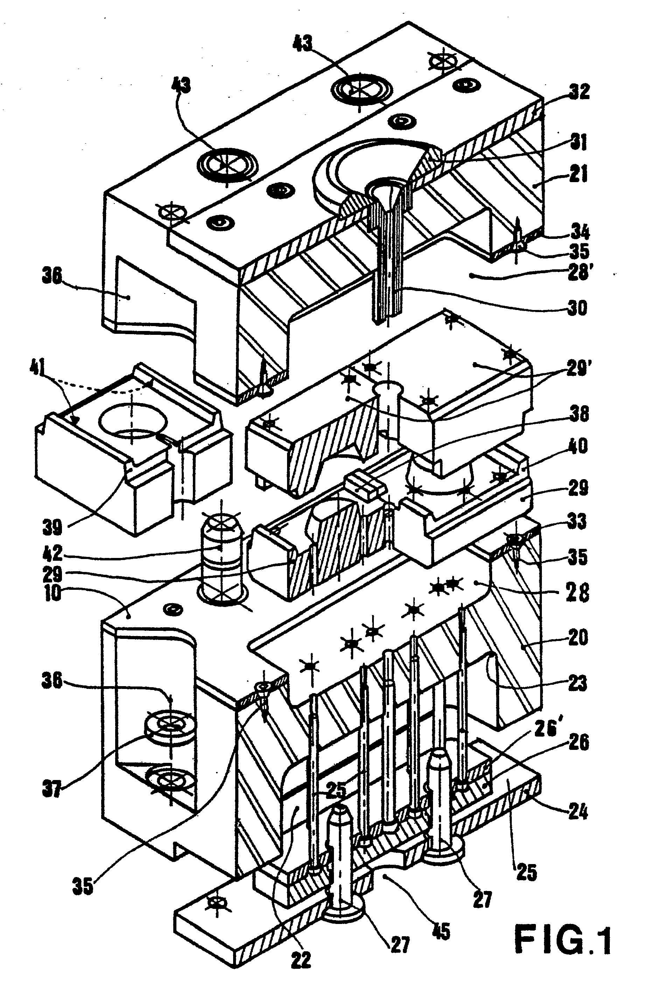

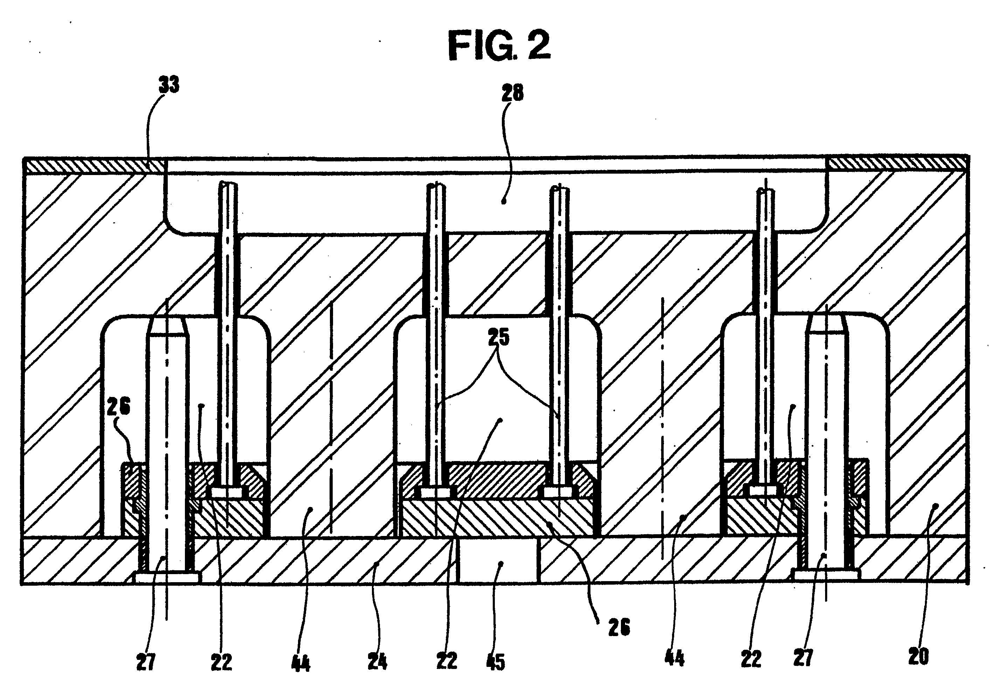

Les empreintes inférieure (29) et supérieure (29') présentent des portées prismatiques de section trapézoïdale qui permettent de les centrer l'une par rapport à l'autre. Ainsi, la surface (38) vient en contact avec la surface (39) ou la surface (40), (fig. 2) avec la surface (41), ce qui définit parfaitement les positions relatives des deux empreintes (29,29') dans deux directions perpendiculaires. Pour faciliter la compréhension, l'élément référencé (39) et (40) à gauche de la figure 1 est une vue en perspective de dessous d'une des deux parties de l'empreinte supérieure (29').

Le bloc inférieur porte plusieurs goujons de centrage, tels que (42), qui s'engagent dans les fourreaux correspondants du bloc supérieur, tels que (43).

En se référant à la figure 2, on voit que la cavité de batterie (22) est traversée par deux piliers-supports (44), de section circulaire, faisant partie intégrante du bloc inférieur (20) et taillés dans celui-ci. Ces piliers (44) reportent sur la plaque de fermeture (24) les efforts subis par l'empreinte (29) ; cette plaque (24) est percée d'une ouverture (45) qui permet la manoeuvre de l'ensemble d'éjection (25), grâce à un verin non-représenté fixé sur la presse.

Dans une variante avantageuse, économique et non-représentée, les colonnes de guidage (27) de la batterie sont supprimées, et la plaque de manoeuvre (26,26') comporte des bagues qui coulissent sur les piliers caractéristiques (44). En pratique, ces bagues sont en un matériau à faible coéfficient de frottements, tel qu'en polyétrafluorethylène.

Les ensembles de moulage conformes à l'invention présentent de nombreux avantages par rapport à ceux commercialisés à ce jour. On peut citer :
- la légèreté, donc la facilité de manipulation et de stockage, puisque les blocs (20,21) sont en alliage léger ;
- la facilité d'usinage de ces blocs, donc une économie ;
- la grande conductibilité mécanique des blocs, ce qui favorise le chauffage ou le refroidissement rapide des empreintes et des pièces si besoin est.
- la possibilité pour ces blocs totalement équipés de pouvoir se monter facilement sur les presses à injection standard.

**Revendications**

1/ Ensemble de moulage pour l'injection des matières plastiques, entre deux empreintes respectivement inférieur (29) et supérieure (29') du type constitué de deux blocs (20, 21) respectivement inférieur (20) et supérieur (21), situés de part et d'autre d'un plan de joint (10), et dans lequel le bloc inférieur (20) comporte une première cavité (22) fermée contenant la batterie (25,26,27) d'éjecteur, le bloc inférieur comportant, sur la face opposée à celle comportant cette première cavité fermée (22), une seconde cavité ouverte (28) destiné à recovoir l'empreinte inférieure (29) de moulage, et le bloc supérieur (21) comportant une troisième cavité ouverte (28'), disposée en regard de la seconde cavité ouverte (28) du bloc inférieur (29'), destinée à recevoir l'empreinte supérieur (29') moulage, est caractérisé en ce que
- les deux blocs sont réalisés en alliage léger,
- ladite première cavité (22) du bloc inférieur (20) recevant la batterie est fermée par une plaque en acier (24) solidaire de ce bloc (20),

- ladite troisième cavité ouverte est connectée à l'organe d'alimentation (30, 31) en matière plastique,
- et chacune des faces en regard de chaque bloc (20, 21) dans lesquelles sont ménagées les cavités ouvertes (28, 29) présentent une plaque interchangeable (33, 34) en acier, disposée en vis-à-vis et au voisinage immédiat du plan de joint (10).

2/ Ensemble selon la revendication 1, caractérisé en ce que les blocs (20,21) sont monoblocs et sont réalisés en un alliage d'aluminium traité thermiquement.

3/ Ensemble selon la revendication 2, caractérisé en ce que l'alliage d'aluminium est un alliage 7075 ou 7010 à l'état T 651.

4/ Ensemble de moulage selon l'une des revendications 1 à 3, caractérisé en ce que le bloc supérieur (21) est muni d'une plaque en acier (32) sur la face opposée à celle (34) formant le plan de joint (10).

5/ Ensemble de moulage selon l'une des revendications 1 à 4, caractérisé en ce que la cavité inférieure (22) où est logée la batterie (25,26,27) comporte des piliers (44) taillés dans ce bloc inférieur (20).

## Patentansprüche

1. Vorrichtung zum Spritzformen von Kunststoffmaterial zwischen zwei Formteilen, beziehungsweise einem unteren (29) und einem oberen (29'), mit zwei Blöcken (20, 21), die beiderseits einer Verbindungsebene (10) angeordnet sind, wobei der untere Block (20) eine erste geschlossene Ausnehmung (22) aufweist, in welcher eine Ausstoss- oder Ausschiebeeinrichtung (25, 26, 27) angeordnet ist, und wobei der untere Block eine zweite offene Ausnehmung (28) an der Fläche aufweist, die der erste geschlossene Ausnehmung (22) gegenüberliegt, zur Aufnahme des unteren Formteiles (29), und wobei der obere Block eine dritte offene Ausnehmung (28') aufweist, die der zweiten offenen Ausnehmung (28) gegenüberliegt, zur Aufnahme des oberen Formteiles (29'), dadurch gekennzeichnet:
– dass, die beiden Blöcke (20, 21) aus einer Leichtlegierung gebildet sind;
– dass, die genannte erste Ausnehmung (22) des unteren Blockes (20) durch eine Stahlplatte (24), geschlossen ist, die mit dem Block verbunden ist, welche die Ausstoss- oder Ausschiebeeinrichtung (25, 26, 27) enthält;
– dass, die genannte dritte offene Ausnehmung (28') an dem Speiseorgan (30, 31) für Kunststoffmaterial verbunden ist;
– und dass, die Blöcke (20, 21) mit austauschbaren Stahlplatten (33, 34) versehen sind, welche die offenen Ausnehmungen (28, 28') enthalten, die einander gegenüberliegend in unmittelbarer Nähe der Verbindungsebene (10) angeordnet sind.

2. Vorrichtung nach Anspruch 1, dadurch gekennzeichnet, dass die Blöcke (20, 21) einstückig ausgebildet und aus einer wärmebehandelten Aluminiumlegierung gebildet sind.

3. Vorrichtung nach Anspruch 2, dadurch gekennzeichnet, dass die Aluminiumlegierung eine Legierung 7075 oder 7010 im behandelten Zustand T 651 ist.

4. Vorrichtung nach einem der Ansprüche 1 bis 3, dadurch gekennzeichnet, dass der obere Block (21) an der Fläche, die der die Verbindungsebene (10) bildenden Fläche (34) gegenüberliegt, mit einer Stahlplatte (32) versehen ist.

5. Vorrichtung nach einem der Ansprüche 1 bis 4, dadurch gekennzeichnet, dass die untere Ausnehmung (22), in welcher die Ausstoss- oder Ausschiebeeinrichtung (25, 26, 28) angeordnet ist, Stützen (44) umfasst, die mit dem unteren Block (20) verbunden und in diesem gebildet sind.

## Claims

1. Moulding assembly for the injection of plastics materials between two impressions, respectively lower (29) and upper (29'), of the type constituted by two blocks (20, 21) respectively lower (20) and upper (21), located on either side of the mould joint (10) and in which the lower block (20) comprises a first closed cavity (22) receiving the battery of ejectors (25, 26, 27), the lower block (20) comprising on the face opposite the face comprising this first closed cavity (21) a second open cavity (28), adapted to receive the lower impression (29) of the mould, and the upper block (21) comprising a third open cavity (28') disposed opposite the second open cavity (28) in the lower block, adapted to receive the upper impression (29') of the mould, characterized in that:
– both blocks are made of light alloy;
– said first cavity (22) of the lower block (20) receiving the battery is closed by a steel plate (24) fast to this block (20);
– said third open cavity is connected to means (30, 31) for supplying plastics material;
– and each of the opposite face of each block (20, 21) which are provided with open cavities (28, 28') are presenting an interchangeable steel plate (33, 34), disposed opposite and in the immediate vicinity of the mould joint (10).

2. Assembly according to claim 1, characterized in that the blocks (20, 21) are monobloc and are made of heat-treated aluminium alloy.

3. Assembly according to claim 2, characterized in that the aluminium alloy is an alloy 7075 or 7010 in state T651.

4. Moulding assembly according to one of the claims 1 to 3, characterized in that the upper block (21) is provided with a steel plate (32) on the face opposite that (34) forming the mould joint (10).

5. Moulding assembly according to one of the claims 1 to 4, characterized in that the lower cavity (22) where the battery (25, 26, 27) is housed presents pillars (44) cut into the lower block (20).

FIG.1

FIG. 2